(19) Europäisches Patentamt
European Patent Office
Office européen des brevets

(11) **EP 4 411 600 A1**

(12) **EUROPEAN PATENT APPLICATION**
published in accordance with Art. 153(4) EPC

(43) Date of publication:
**07.08.2024 Bulletin 2024/32**

(21) Application number: **21958438.0**

(22) Date of filing: **27.09.2021**

(51) International Patent Classification (IPC):
***G06N 20/00*** *(2019.01)*

(52) Cooperative Patent Classification (CPC):
**G06N 20/00**

(86) International application number:
**PCT/JP2021/035299**

(87) International publication number:
**WO 2023/047565 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventor: **FUKUDA, Takasabuo
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **MACHINE LEARNING EXPLANATION PROGRAM, DEVICE, AND METHOD**

(57) A machine learning explanation apparatus generates rules each including a condition and a conclusion for a case where the condition is satisfied, based on training data used for training of a machine learning model, extracts, in the generated rules, a set of rules {$R_i$} of a family of subsets that is to be a cover of a certain rule K based on the training data, selects rules $R_i$ for which the difference between confidence (conf) of rule K and confidence (conf) of rule $R_i$ is less than a predetermined threshold, and outputs, for an inference result of the machine learning model, explanatory information including rule K and rule $R_i$ remaining after deleting the selected rules $R_i$ among the set of rules {$R_i$}.

FIG. 9

RULE K : A<5 ∧ B<5 → **negative** (conf=0.2)
RULE $R_1$ : A<5 ∧ B<3 → negative (conf=0.1)
RULE $R_2$ : ¬B<4 ∧ B<5 → negative (conf=0.1)
RULE $R_3$ : ¬A<3 ∧ A<4 ∧ ¬B<3 ∧ B<4 → **positive** (conf=0.8)
RULE $R_4$ : A<3 ∧ B<5 → negative (conf=0.1)
RULE $R_5$ : ¬A<4 ∧ A<5 ∧ B<5 → negative (conf=0.1)

EP 4 411 600 A1

**Description**

FIELD

The embodiment discussed herein is related to a machine learning explanation program, a machine learning explanation apparatus, and a machine learning explanation method.

BACKGROUND

In the field of explainable AI, explanatory information on an inference result of a machine learning model is provided together with the inference result. In such field of explainable AI, for example, there is a technique of extracting and enumerating rules, which are syntax of an If-then description, from training data used for machine learning of a machine learning model, and presenting the rules to a user. For example, a technique has been proposed in which, under various constraints in a supervised setting, minimum appearance patterns are mined from a high-dimensional dataset. In this technique, rules that satisfy an arbitrary constraint are efficiently enumerated for binarized input data.

SUMMARY

TECHNICAL PROBLEM

There is a case in which, when rules that may be extracted from data are presented as explanatory information of an inference result of a machine learning model, redundant rules are generated and explanatory information that is easy to interpret may not be provided.

As one aspect, an object of the disclosed technique is to provide explanatory information that is easy to interpret as explanatory information of an inference result of a machine learning model.

SOLUTION TO PROBLEM

According to one aspect, the disclosed technique generates a first plurality of rules each including a condition and a conclusion for a case where the condition is satisfied, based on pieces of training data used for training of a machine learning model. Further, the disclosed technique determines whether a first plurality of pieces of data and a second plurality of pieces of data agree. The first plurality of pieces of data is data satisfying a first condition included in a first rule of the first plurality of rules among the pieces of training data. The second plurality of pieces of data is data satisfying at least one of a plurality of conditions included in a second plurality of rules of the first plurality of rules among the pieces of training data. When the pieces of data agree, the disclosed technique selects one or a plurality of rules from the second plurality of rules based on a result of comparison between a value indicating a probability of satisfaction of the first rule based on the pieces of training data and a plurality of values indicating respective probabilities of satisfaction of the second plurality of rules. Then, the disclosed technique outputs, for an inference result of the machine learning model, explanatory information including the first rule and another rule other than the one or a plurality of rules among the second plurality of rules.

ADVANTAGEOUS EFFECTS OF INVENTION

As one aspect, there is an effect that explanatory information that is easy to interpret may be provided as explanatory information of an inference result of a machine learning model.

BRIEF DESCRIPTION OF DRAWINGS

FIG. 1 is a functional block diagram of a machine learning explanation apparatus.
FIG. 2 is a diagram for explanation of a relationship between training data, a machine learning model, and a rule.
FIG. 3 is a diagram illustrating an example of training data.
FIG. 4 is a diagram illustrating an example of binarized training data.
FIG. 5 is a diagram for explanation of a description format of a rule.
FIG. 6 is a diagram illustrating an example of enumerated rules.
FIG. 7 is a diagram illustrating an example of a variable range represented by a rule.
FIG. 8 is a diagram illustrating an example of a variable range represented by a rule including a rule serving as a partial exception.
FIG. 9 is a diagram illustrating an example of a covering relationship of rules.
FIG. 10 is a block diagram schematically illustrating the configuration of a computer that functions as the machine learning explanation apparatus.
FIG. 11 is a flowchart illustrating an example of machine learning explanation processing.

DESCRIPTION OF EMBODIMENTS

Hereinafter, an example of an embodiment according to the disclosed technique will be described with reference to the drawings.

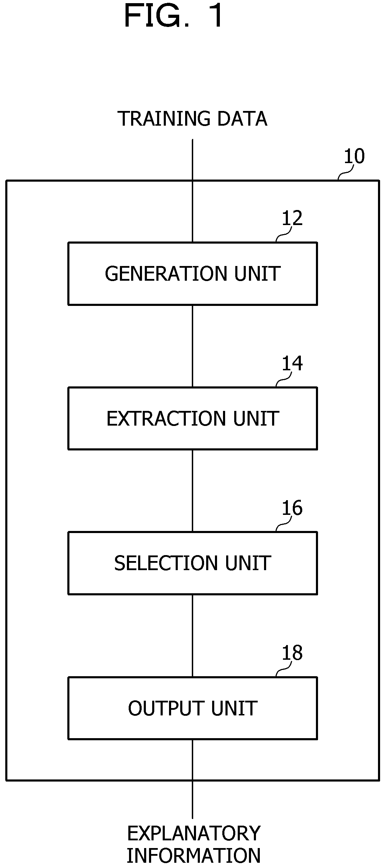

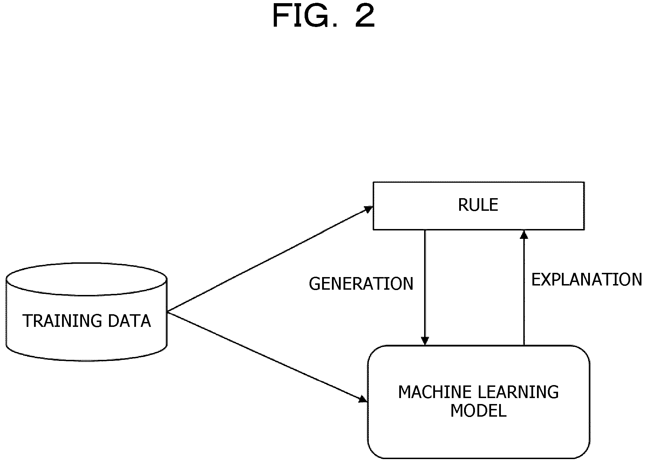

As illustrated in FIG. 1, training data used for training of a machine learning model is input to the machine learning explanation apparatus 10. The machine learning explanation apparatus 10 generates and outputs explanatory information of an inference result of a machine learning model based on a rule extracted from the training data. Here, a relationship between training data, a machine learning model, and a rule will be described with reference to FIG. 2. A rule may be generated from training data and a machine learning model may be generated using the generated rule, or a machine learning model may be generated using training data and a rule may be used as explanatory information of the generated machine learning model. The present embodiment corresponds to the latter case.

As illustrated in FIG. 1, the machine learning explanation apparatus 10 functionally includes a generation unit 12, an extraction unit 14, a selection unit 16, and an output unit 18.

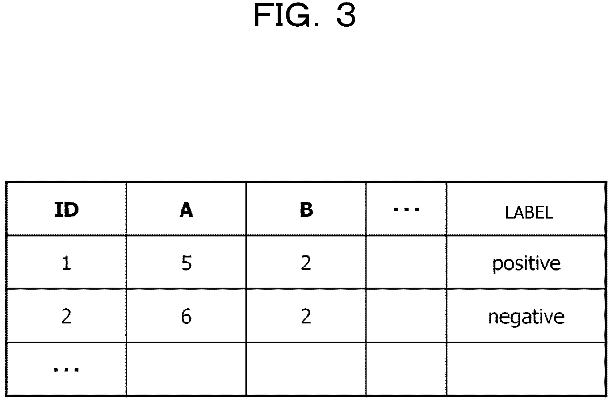

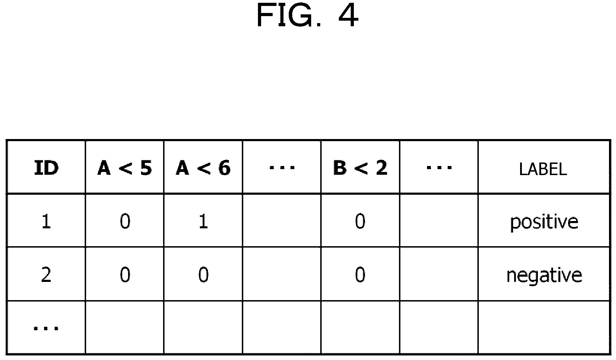

The generation unit 12 generates a first plurality of rules each including a condition and a conclusion for a case where the condition is satisfied, based on training data used for training of a machine learning model. FIG. 3 illustrates an example of training data. In FIG. 3, each row (each record) corresponds to one piece of training data. "ID" is identification information of training data. Each piece of training data includes the value for each item such as item "A", item "B", ..., and a "label" indicating a conclusion of each piece of training data for a predetermined task. The generation unit 12 sets a condition represented by a combination of each item and a possible value or range of values of the item. For example, the generation unit 12 sets, for each item, a plurality of explanatory variables represented by an item name, an equal sign or sign of inequality, and a value. As illustrated in FIG. 4, the generation unit 12 binarizes the value of each item of training data based on whether the value corresponds to each set explanatory variable or not. In the example of FIG. 4, the value of each item of training data is converted into "1" when the value corresponds to the explanatory variable and into "0" when the value does not correspond to the explanatory variable.

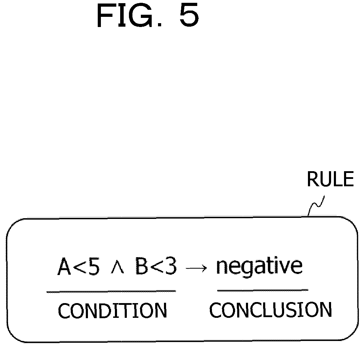

The generation unit 12 generates each of exhaustive combinations of explanatory variables as a condition, and associates a conclusion with each generated condition. For example, the generation unit 12 associates the value of the most frequent label among the labels of the pieces of training data satisfying a condition, as the conclusion of the condition. More specifically, when there are ten pieces of training data satisfying a condition of "A < 5 ∧ B < 3" and the label of nine pieces of training data out of ten is "negative" and the label of one piece of training data is "positive", the generation unit 12 associates the conclusion "negative" with the condition. In this manner, the generation unit 12 generates a rule in which a condition and a conclusion are associated with each other. Hereinafter, as illustrated in FIG. 5, a rule is represented in a format in which a condition is described on the left side of an arrow and a conclusion is described on the right side of the arrow.

Further, the generation unit 12 calculates, for each rule, a value indicating a probability of satisfaction of the rule. A value satisfying a probability of satisfaction of a rule is a value indicating an influence of the rule on an inference result of a machine learning model, and is a value indicating a probability that the conclusion of the rule is satisfied when certain data satisfies the condition of the rule. The generation unit 12 calculates a value satisfying a probability of satisfaction of a rule based on the number of pieces of training data satisfying a condition and the number of pieces of training data of which conclusion indicated by the label is a predetermined conclusion among the pieces of training data. Specifically, the generation unit 12 acquires the number of pieces of training data satisfying a condition by using binarized pieces of training data and counting the pieces of training data in which the values for all explanatory variables included in the condition are "1".

More specifically, as in the examples of FIGs. 3 and 4, it is assumed that a "label" of training data is a binary value of "positive" or "negative". In this case, the generation unit 12 may calculate confidence (hereinafter also referred to as "conf") represented by the following formula (1) as the value satisfying a probability of satisfaction of a rule.

conf = number of pieces of training data satisfying condition of which label is "positive" / number of pieces of training data satisfying condition

In the case of formula (1), it is represented that as the value of conf is larger, that is, closer to 1, the conclusion is more likely to be "positive" when the condition of the rule is satisfied. On the other hand, it is represented that as the value of conf is smaller, that is, closer to 0, the conclusion is more likely to be "negative" when the condition of the rule is satisfied.

Hereinafter, a case where conf represented by formula (1) is used as the value satisfying a probability of satisfaction of a rule will be described as an example. However, the value satisfying a probability of satisfaction of a rule is not limited to this case. For example, the generation unit 12 may calculate coverage represented by the number of positive examples satisfying a condition to the total number of positive examples of training data as the value satisfying a probability of satisfaction of a rule. Note that a positive example is a piece of training data of which label is "positive".

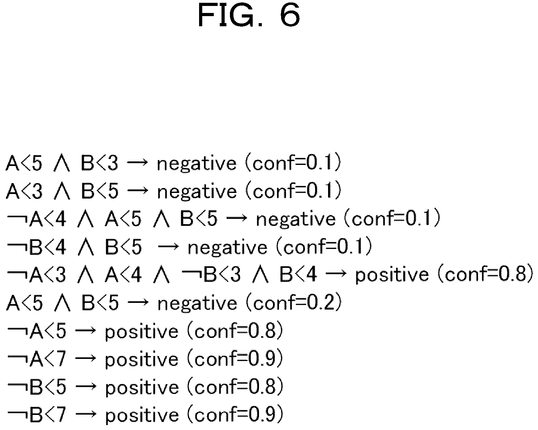

Out of the generated rules, the generation unit 12 extracts and enumerates rules in which the calculated conf satisfies a predetermined constraint. A predetermined constraint is a constraint representing that the rule has a large influence on an inference result of a machine learning model. For example, the generation unit 12 extracts rules in which conf is 0.7 or more or conf is 0.3 or less, and enumerates the rules as illustrated in FIG. 6. Note that, in FIG. 6, conf calculated for a rule is also written in parentheses written together with the rule.

Note that, although rules generated from training data in which the value of each item is a numerical value have been described above, rules may also be generated from training data in which the value of an item is categorical as illustrated in the following Rule 1 and Rule 2.

Rule 1: city = NYC $\rightarrow$ class = X
Rule 2: race = black, city = NYC $\rightarrow$ class = Y

Further, conclusions are not limited to the two values of "positive" and "negative", and conclusions classified into three or more classes may be associated. When there are three or more conclusions, such conf as illustrated in the following formula (2) is to be calculated.

conf = number of pieces of training data satisfying condition of which label is same as conclusion of rule / number of pieces of training data satisfying condition

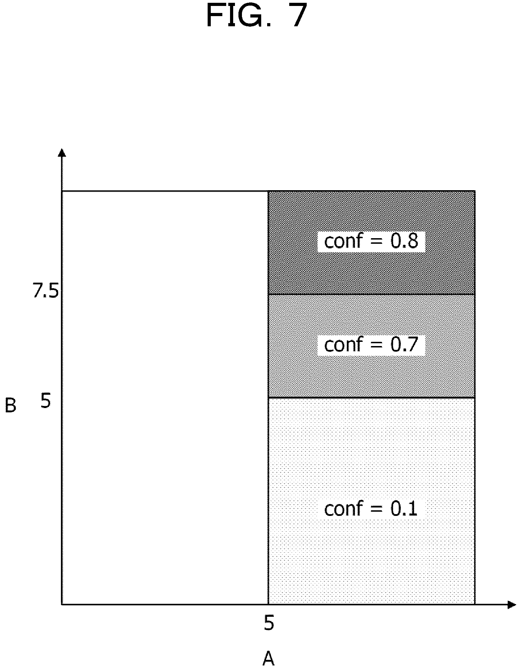

Here, requirements of a rule presented to a user as explanatory information in the present embodiment will be described. For example, it is assumed that rules in which a relationship between a condition and conf is as illustrated in FIG. 7 are enumerated. In the example of FIG. 7, in a case where a condition is represented by a combination of explanatory variables using items "A" and "B", the horizontal axis corresponds to the value of an explanatory variable using item "A", and the vertical axis corresponds to the value of an explanatory variable using item "B". Further, in the example of FIG. 7, in an area represented by a combination of an explanatory variable using item "A" and an explanatory variable using item "B", conf calculated for a rule including the condition corresponding to the combination is written.

The basic requirement is to be able to read a variable range that affects an inference result of a machine learning model. In the example of FIG. 7, the rule "A > 5 $\wedge$ B < 5 $\rightarrow$ negative (conf = 0.1)" indicates that an inference result of a machine learning model is likely to be "negative" when data is A > 5 and B < 5. That is, it is represented that there is a negative influence on an inference result of a machine learning model in the variable range indicated by the condition of this rule.

The next requirement is to be able to read how an influence on an inference result of a machine learning model changes with a change in variable range. From the following three rules in the example of FIG. 7, such influence due to a change in variable range may be read that while there is a negative influence when the data is A > 5 and B < 5, the influence changes to a positive influence when B > 5, and the degree of positive influence further increases when B > 7.5.

$$A > 5 \wedge B < 5 \rightarrow \text{negative (conf = 0.1)}$$

$$A > 5 \wedge B > 5 \rightarrow \text{positive (conf = 0.7)}$$

$$A > 5 \wedge B > 7.5 \rightarrow \text{positive (conf = 0.8)}$$

The next requirement is to reduce the number of rules to be presented as much as possible when there is almost no difference in the amount of information to be presented to a user. In the example of FIG. 7, when the following three rules are enumerated, it is better to collectively present the rules as the rule of "A > 5 $\wedge$ B < 5 $\rightarrow$ negative (conf = 0.1)".

$$A > 5 \land B < 3 \to \text{negative (conf = 0.1)}$$

$$A > 5 \land B < 4 \to \text{negative (conf = 0.1)}$$

$$A > 5 \land B < 5 \to \text{negative (conf = 0.1)}$$

When rules enumerated by the generation unit 12 are presented as they are, there is a case where the presentation of rules to a user is redundant when a partial exception is to be explained. A partial exception will be described using an abstract example. For example, in a case where explanation is given as to whether a fruit = {melon, grape, watermelon, peach, lemon} is sweet or sour, cumulative explanation of rules such as "melon is sweet, grape is sweet, watermelon is sweet, peach is sweet, and lemon is sour" makes the explanation redundant. In such case, the redundancy may be resolved by setting the rule "lemon is sour" as a partial exception and giving an explanation of the partial exception in addition to an overall explanation such as "fruit is sweet, but lemon is sour".

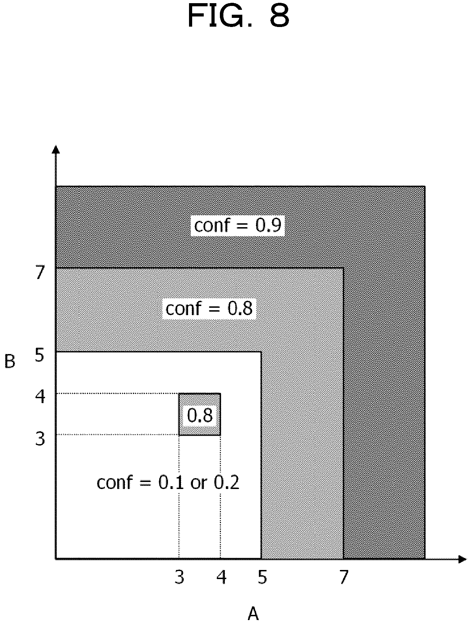

A diagram is illustrated in FIG. 8 in which the variable ranges represented by the rules enumerated as illustrated in FIG. 6 are represented in a manner similar to that in FIG. 7. As illustrated in FIG. 8, the variable range of A < 5 and B < 5 includes a variable range indicating a partial exception. In a case where explanation is given for this variable range in the rules illustrated in FIG. 6, the explanation is redundant since it is cumulative explanation of rules up to the fifth rule from the top. For example, when the rules up to the fifth rule from the top of the rules illustrated in FIG. 6 are presented, it is assumed that a user makes the following interpretation.

User interpretation for the variable range of A < 5 and B < 5:
negative when A < 5 and B < 3, A < 3 and B < 5, ¬A < 4 and A < 5 and B < 5, -,B < 4 and B < 5, and A < 5 and B < 5, and positive when -,A < 3 and A < 4 and -,B < 3 and B < 4

A case is considered in which the requirement "to reduce the number of rules to be presented as much as possible when there is almost no difference in the amount of information to be presented to a user" is satisfied, while satisfying the requirement "to be able to read how an influence on an inference result of a machine learning model changes with a change in variable range" described above. In this case, the following interpretation may be made by selecting the following two rules from the rules enumerated as illustrated in FIG. 6 in consideration of a partial exception.

Selected rules:

$$A < 5 \land B < 5 \to \text{negative (conf = 0.2)}$$

$$\lnot A < 3 \land A < 4 \land \lnot B < 3 \land B < 4 \to \text{positive (conf = 0.8)}$$

User interpretation for the variable range of A < 5 and B < 5:
negative when A < 5 and B < 5, with exception of positive when -,A < 3 and A < 4 and -,B < 3 and B < 4

In the present embodiment, rules that may be interpreted as described above are selected by the extraction unit 14 and the selection unit 16 from the rules enumerated by the generation unit 12 in consideration of a partial exception. Hereinafter, the extraction unit 14 and the selection unit 16 will be described in detail.

The extraction unit 14 extracts a covering relationship of rules based on pieces of training data. When a first rule and a second plurality of rules are in a covering relationship, a first plurality of pieces of data satisfying a condition included in the first rule among the pieces of training data agrees a second plurality of pieces of data satisfying at least one of a plurality of conditions included in the second plurality of rules among the pieces of training data.

Specifically, the extraction unit 14 sets, from the set of rules enumerated by the generation unit 12, a set of pieces of training data satisfying a certain rule K as S, a set of rules $R_i$ constituting a family of subsets of S as $\{R_i\}$ ($i \in$ I), and a set of pieces of training data satisfying the set of rules $\{R_i\}$ as $\{U_i\}$ ($i \in$ I). Rule K is an example of the "first rule", the set of rules $\{R_i\}$ is an example of the "second plurality of rules", data S is an example of the "first plurality of pieces of data", and data $\{U_i\}$ is an example of the "second plurality of pieces of data". Then, the extraction unit 14 extracts the relationship between rule K and the set of rules $\{R_i\}$ as a covering relationship based on the training data satisfying the following formula (3) and the correspondence relationship between rule and data represented by formula (4).

[Math. 1]

$$S = \bigcup_{i \in I} U_i \qquad (3)$$

$$\left. \begin{array}{ccc} \text{Rule K} & \supseteqq & \text{Rule R} \\ \downarrow & & \downarrow \\ \text{Data S} & \supseteqq & \text{Data U} \end{array} \right\} \qquad (4)$$

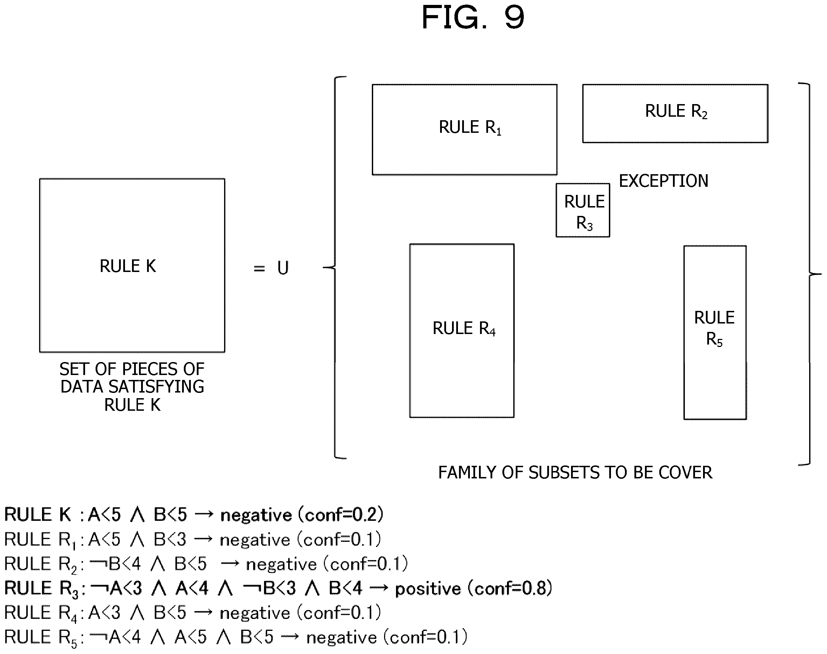

More specifically, the extraction unit 14 sets one rule selected from the set of rules enumerated by the generation unit 12 as rule K, and extracts the pieces of training data satisfying rule K as data S. Further, the extraction unit 14 sets each of all combinations of one or more rules selected from the remaining rules as the set of rules $\{R_i\}$, and extracts the pieces of training data satisfying the set of rules $\{R_i\}$ as data $\{U_i\}$. Then, the extraction unit 14 determines whether or not the extracted data S and data $\{U_i\}$ satisfy formula (3), and when formula (3) is satisfied, extracts rule K corresponding to data S and the set of rules $\{R_i\}$ corresponding to data $\{U_i\}$ as a covering relationship. FIG. 9 illustrates an example of a covering relationship between rule K and the set of rules $\{R\}$.

The selection unit 16 selects one or a plurality of rules from the set of rules $\{R_i\}$ based on a result of comparison between conf of rule K and conf of each rule $R_i$. Specifically, the selection unit 16 determines whether or not to execute processing of selecting one or a plurality of rules from the set of rules $\{R_i\}$ according to the number of rules $R_i$ included in the set of rules $\{R\}$. For example, the selection unit 16 executes the processing of selecting one or a plurality of rules from the set of rules $\{R_i\}$ when the number of rules included in the set of rules $\{R_i\}$ is larger than a value obtained by adding a predetermined value $\lambda$ to the number of patterns of conf of rule K and each rule $R_i$. This is based on the idea that it is sufficient that the number of rules for giving an explanation for a certain variable range is as many as about the number of patterns of conf in the variable range. In the case of the example of FIG. 9, the number of rules included in the set of rules $\{R_i\}$ is five, and the number of patterns of conf of rule K and each rule $R_i$ is three patterns of 0.1, 0.2, and 0.8. In this case, when $\lambda = 1$, the selection unit 16 determines to execute the processing of selecting one or a plurality of rules from the set of rules $\{R_i\}$.

Further, the selection unit 16 selects, from the set of rules $\{R_i\}$, rules $R_i$ whose influence on an inference result of a machine learning model is close to that of rule K. For example, when the difference between conf of rule K and conf of rule $R_i$ is less than a predetermined threshold, the selection unit 16 may determine that the influence is close. For example, in the example of FIG. 9, when the threshold is 0.2, the selection unit 16 selects rule $R_1$, rule $R_2$, rule $R_4$, and rule $R_5$ for which the difference from conf = 0.2 of rule K is 0.1.

The output unit 18 outputs, for an inference result of a machine learning model, explanatory information including rule K and another rule $R_i$ other than the one or a plurality of rules $R_i$ selected by the selection unit 16 among rules $R_i$ included in the set of rules $\{R\}$. When the processing of selecting one or a plurality of rules is not executed by the selection unit 16, the output unit 18 outputs, for an inference result of a machine learning model, explanatory information including rule K and the set of rules $\{R_i\}$ extracted by the extraction unit 14 as a covering relationship.

The rules $R_i$ selected by the selection unit 16 are rules whose influence on an inference result of a machine learning model is close to that of rule K. That is, it may be said that rule $R_i$ other than the rules $R_i$ selected by the selection unit 16 is a rule serving as an exception among the rules covering rule K. Note that, in explanatory information, conf of each rule may be added to the rules. In the case of the above-described example of FIG. 9, since rule $R_1$, rule $R_2$, rule $R_4$, and rule $R_5$ are selected by the selection unit 16, the output unit 18 outputs rule K and rule $R_3$ as explanatory information (bold portions of the rules on the lower left side in FIG. 9). Accordingly, explanatory information may be output in which interpretation such as "negative when A < 5 and B < 5, with exception of positive when -,A < 3 and A < 4 and -,B < 3 and B < 4" described above may be made. Note that the output unit 18 may output rule K to be included in the explanatory information and the remaining rule of the set of rules $\{R_i\}$, by attaching additional information to rule K indicating that rule K is a rule of principle and attaching additional information to the remaining rule indicating that the remaining rule is a rule of exception.

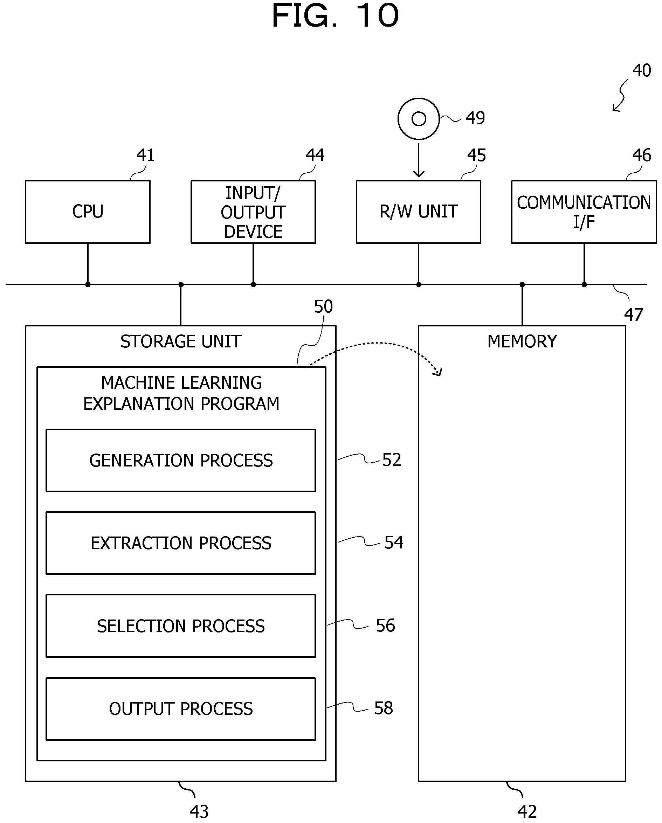

For example, the machine learning explanation apparatus 10 may be realized by a computer 40 illustrated in FIG. 10. The computer 40 includes a central processing unit (CPU) 41, a memory 42 serving as a temporary storage area, and a nonvolatile storage unit 43. Further, the computer 40 includes an input/output device 44 such as an input unit, a display unit, and the like and a read/write (R/W) unit 45 that controls reading and writing of data from and to a storage medium 49. Further, the computer 40 includes a communication interface (I/F) 46 that is coupled to a network such as the Internet. The CPU 41, the memory 42, the storage unit 43, the input/output device 44, the R/W unit 45, and the communication I/F 46 are coupled to each other via a bus 47.

The storage unit 43 may be realized by a hard disk drive (HDD), a solid-state drive (SSD), a flash memory, or the like. A machine learning explanation program 50 for causing the computer 40 to function as the machine learning explanation apparatus 10 is stored in the storage unit 43 serving as a storage medium. The machine learning explanation program 50 includes a generation process 52, an extraction process 54, a selection process 56, and an output process 58.

The CPU 41 reads the machine learning explanation program 50 from the storage unit 43, loads the read machine learning explanation program 50 into the memory 42, and sequentially executes the processes included in the machine learning explanation program 50. The CPU 41 operates as the generation unit 12 illustrated in FIG. 1 by executing the generation process 52. Further, the CPU 41 operates as the extraction unit 14 illustrated in FIG. 1 by executing the extraction process 54. Further, the CPU 41 operates as the selection unit 16 illustrated in FIG. 1 by executing the selection process 56. Further, the CPU 41 operates as the output unit 18 illustrated in FIG. 1 by executing the output process 58. Accordingly, the computer 40 that executes the machine learning explanation program 50 functions as the machine learning explanation apparatus 10. Note that the CPU 41, which executes the program, is hardware.

Note that, for example, the functions realized by the machine learning explanation program 50 may also be realized by a semiconductor integrated circuit, in more detail, an application-specific integrated circuit (ASIC) or the like.

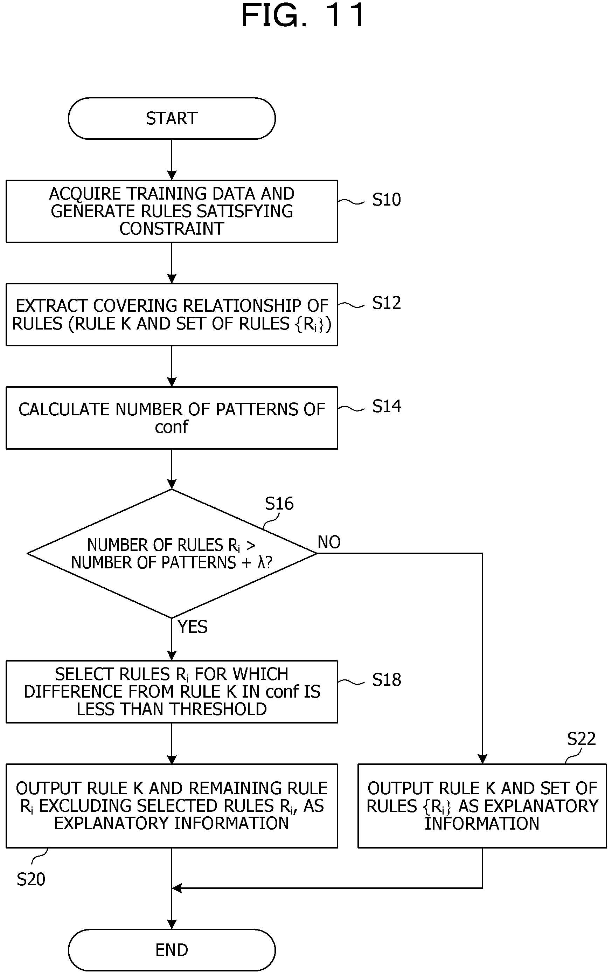

Next, an operation of the machine learning explanation apparatus 10 according to the present embodiment will be described. When training data is input to the machine learning explanation apparatus 10 and an instruction of outputting explanatory information is given, machine learning explanation processing illustrated in FIG. 11 is executed in the machine learning explanation apparatus 10. Note that the machine learning explanation processing is an example of the machine learning explanation method of the disclosed technique.

In step S10, the generation unit 12 acquires the training data input to the machine learning explanation apparatus 10. Then, the generation unit 12 generates each of exhaustive combinations of explanatory variables represented by the value of each item included in the training data as a condition, and generates a rule by associating a conclusion with each condition based on the label of the training data satisfying each generated condition. Furthermore, for each rule, the generation unit 12 calculates, for example, conf of formula (1) as the value indicating a probability of satisfaction of the rule. Then, among the generated conditions, the generation unit 12 extracts and enumerates rules satisfying a predetermined constraint such as that the calculated value of conf is within a predetermined range.

Next, in step S12, in the set of rules enumerated in the above step S10, the extraction unit 14 determines whether or not the set of pieces of training data S satisfying rule K and the set of pieces of training data $\{U_i\}$ satisfying the set of rules $\{R_i\}$ satisfy formula (3). The extraction unit 14 extracts, as a covering relationship, a relationship between rule K and the set of rules $\{R_i\}$ corresponding to S and $\{R_i\}$ satisfying formula (3).

Next, in step S14, the selection unit 16 calculates the number of patterns of conf included in rule K and the set of rules $\{R_i\}$ extracted as a covering relationship in the above step S12. Next, in step S16, the selection unit 16 determines whether or not the number of rules Ri included in the set of rules $\{R_i\}$ is larger than a value obtained by adding a predetermined value $\lambda$ to the number of patterns calculated in the above step S14. When number of rules $R_i$ > number of patterns + $\lambda$, the processing proceeds to step S18. When number of rules $R_i \leq$ number of patterns + $\lambda$, the processing proceeds to step S22.

In step S18, the selection unit 16 selects rules $R_i$ for which the difference between conf of rule K and conf of rule $R_i$ is less than a predetermined threshold. Next, in step S20, the output unit 18 outputs, for an inference result of a machine learning model, explanatory information including rule K and rule $R_i$ other than the rules $R_i$ selected in the above step S18 among rules $R_i$ included in the set of rules $\{R_i\}$. On the other hand, in step S22, the output unit 18 outputs, for an inference result of a machine learning model, explanatory information including rule K and the set of rules $\{R_i\}$ extracted as a covering relationship in the above step S12. Then, the machine learning explanation processing ends.

As described above, the machine learning explanation apparatus according to the present embodiment generates a first plurality of rules each including a condition and a conclusion for a case where the condition is satisfied, based on pieces of training data used for training of a machine learning model. Further, the machine learning explanation apparatus extracts a covering relationship of rules in which a first plurality of pieces of data satisfying a first condition included in a first rule among the pieces of training data and a second plurality of pieces of data satisfying at least one of a plurality of conditions included in a second plurality of rules among the pieces of training data agree. Furthermore, the machine learning explanation apparatus selects one or a plurality of rules from the second plurality of rules based on a result of comparison between a value indicating a probability of satisfaction of the first rule based on the pieces of training data and a plurality of values indicating respective probabilities of satisfaction of the second plurality of rules. Then, the machine learning explanation apparatus outputs, for an inference result of the machine learning model, explanatory information including the first rule and another rule other than the one or a plurality of rules among the second plurality of rules. Accordingly, since the entirety and a rule that is an exception thereof are output as explanatory information, explanatory information that is easy to interpret may be provided as explanatory information of an inference result of a machine learning model.

Note that, although in the above embodiment, an aspect has been described in which the machine learning explanation program is stored (installed) in advance in the storage unit, this is not the only case. The program according to the disclosed technique may also be provided in a form in which the program is stored in a storage medium such as a compact disc read-only memory (CD-ROM), a Digital Versatile Disc (DVD)-ROM, or a Universal Serial Bus (USB) memory.

CITATION LIST

NON PATENT LITERATURE

[NPL 1] Hiroaki Iwashita, Takuya Takagi, Hirofumi Suzuki, Keisuke Goto, Kotaro Ohori, Hiroki Arimura, "Efficient Constrained Pattern Mining Using Dynamic Item Ordering for Explainable Classification" arXiv:2004.08015v1 [cs.DB] 17 Apr 2020

REFERENCE SIGNS LIST

10    machine learning explanation apparatus
12    generation unit
14    extraction unit
16    selection unit
18    output unit
40    computer
41    CPU
42    memory
43    storage unit
49    storage medium
50    machine learning explanation program

**Claims**

1.  A machine learning explanation program for causing a computer to execute processing comprising:

    generating, based on pieces of training data used for training of a machine learning model, a first plurality of rules that each include a condition and a conclusion for a case where the condition is satisfied;
    when a first plurality of pieces of data that satisfy a first condition included in a first rule of the first plurality of rules among the pieces of training data and a second plurality of pieces of data that satisfy at least one of a plurality of conditions included in a second plurality of rules of the first plurality of rules among the pieces of training data agree, selecting one or a plurality of rules from the second plurality of rules based on a result of comparison between a value that indicates a probability of satisfaction of the first rule based on the pieces of training data and a plurality of values that indicate respective probabilities of satisfaction of the second plurality of rules; and
    outputting, for an inference result of the machine learning model, explanatory information that includes the first rule and another rule other than the one or a plurality of rules among the second plurality of rules.

2.  The machine learning explanation program according to claim 1, wherein
    the selecting of the one or a plurality of rules is executed when a number of the second plurality of rules is larger than a value obtained by adding a predetermined value to a number of patterns of values that indicate a probability of satisfaction of the first rule and each of the second plurality of rules.

3.  The machine learning explanation program according to claim 1 or claim 2, wherein
    the selecting of the one or a plurality of rules includes, when a difference between a value that indicates a probability of satisfaction of the first rule and a value that indicates a probability of satisfaction of a second rule included in the second plurality of rules is less than a predetermined threshold, selecting the one or a plurality of rules that include the second rule.

**4.** The machine learning explanation program according to any one of claim 1 to claim 3, wherein the value that indicates a probability of satisfaction is a value based on, among the pieces of training data, a number of pieces of training data that satisfy a condition included in a rule and a number of pieces of training data that satisfy a condition included in a rule and in which a conclusion included in a rule is a predetermined conclusion.

**5.** The machine learning explanation program according to any one of claim 1 to claim 4, wherein the explanatory information includes values that indicate a probability of satisfaction of each of the first rule and the another rule included in the explanatory information.

**6.** The machine learning explanation program according to any one of claim 1 to claim 5, wherein the outputting of the explanatory information includes outputting the first rule as a rule of principle and outputting the another rule as a rule of exception.

**7.** A machine learning explanation apparatus comprising a control unit configured to perform processing comprising:

generating, based on pieces of training data used for training of a machine learning model, a first plurality of rules that each include a condition and a conclusion for a case where the condition is satisfied;
when a first plurality of pieces of data that satisfy a first condition included in a first rule of the first plurality of rules among the pieces of training data and a second plurality of pieces of data that satisfy at least one of a plurality of conditions included in a second plurality of rules of the first plurality of rules among the pieces of training data agree, selecting one or a plurality of rules from the second plurality of rules based on a result of comparison between a value that indicates a probability of satisfaction of the first rule based on the pieces of training data and a plurality of values that indicate respective probabilities of satisfaction of the second plurality of rules; and
outputting, for an inference result of the machine learning model, explanatory information that includes the first rule and another rule other than the one or a plurality of rules among the second plurality of rules.

**8.** The machine learning explanation apparatus according to claim 7, wherein the selecting of the one or a plurality of rules is executed when a number of the second plurality of rules is larger than a value obtained by adding a predetermined value to a number of patterns of values that indicate a probability of satisfaction of the first rule and each of the second plurality of rules.

**9.** The machine learning explanation apparatus according to claim 7 or claim 8, wherein the selecting of the one or a plurality of rules includes, when a difference between a value that indicates a probability of satisfaction of the first rule and a value that indicates a probability of satisfaction of a second rule included in the second plurality of rules is less than a predetermined threshold, selecting the one or a plurality of rules that include the second rule.

**10.** The machine learning explanation apparatus according to any one of claim 7 to claim 9, wherein the value that indicates a probability of satisfaction is a value based on, among the pieces of training data, a number of pieces of training data that satisfy a condition included in a rule and a number of pieces of training data that satisfy a condition included in a rule and in which a conclusion included in a rule is a predetermined conclusion.

**11.** The machine learning explanation apparatus according to any one of claim 7 to claim 10, wherein the explanatory information includes values that indicate a probability of satisfaction of each of the first rule and the another rule included in the explanatory information.

**12.** The machine learning explanation apparatus according to any one of claim 7 to claim 11, wherein the outputting of the explanatory information includes outputting the first rule as a rule of principle and outputting the another rule as a rule of exception.

**13.** A machine learning explanation method implemented by a computer, the method comprising:

generating, based on pieces of training data used for training of a machine learning model, a first plurality of rules that each include a condition and a conclusion for a case where the condition is satisfied;
when a first plurality of pieces of data that satisfy a first condition included in a first rule of the first plurality of rules among the pieces of training data and a second plurality of pieces of data that satisfy at least one of a plurality of conditions included in a second plurality of rules of the first plurality of rules among the pieces of training data agree, selecting one or a plurality of rules from the second plurality of rules based on a result of comparison between a value that indicates a probability of satisfaction of the first rule based on the pieces of training data and a plurality of values that indicate respective probabilities of satisfaction of the second plurality of rules; and

outputting, for an inference result of the machine learning model, explanatory information that includes the first rule and another rule other than the one or a plurality of rules among the second plurality of rules.

14. The machine learning explanation method according to claim 13, wherein
the selecting of the one or a plurality of rules is executed when a number of the second plurality of rules is larger than a value obtained by adding a predetermined value to a number of patterns of values that indicate a probability of satisfaction of the first rule and each of the second plurality of rules.

15. The machine learning explanation method according to claim 13 or claim 14, wherein
the selecting of the one or a plurality of rules includes, when a difference between a value that indicates a probability of satisfaction of the first rule and a value that indicates a probability of satisfaction of a second rule included in the second plurality of rules is less than a predetermined threshold, selecting the one or a plurality of rules that include the second rule.

16. The machine learning explanation method according to any one of claim 13 to claim 15, wherein
the value that indicates a probability of satisfaction is a value based on, among the pieces of training data, a number of pieces of training data that satisfy a condition included in a rule and a number of pieces of training data that satisfy a condition included in a rule and in which a conclusion included in a rule is a predetermined conclusion.

17. The machine learning explanation method according to any one of claim 13 to claim 16, wherein
the explanatory information includes values that indicate a probability of satisfaction of each of the first rule and the another rule included in the explanatory information.

18. The machine learning explanation apparatus according to any one of claim 13 to claim 17, wherein
the outputting of the explanatory information includes outputting the first rule as a rule of principle and outputting the another rule as a rule of exception.

19. A non-transitory computer-readable recording medium storing a machine learning explanation program for causing a computer to execute processing comprising:

generating, based on pieces of training data used for training of a machine learning model, a first plurality of rules that each include a condition and a conclusion for a case where the condition is satisfied;
when a first plurality of pieces of data that satisfy a first condition included in a first rule of the first plurality of rules among the pieces of training data and a second plurality of pieces of data that satisfy at least one of a plurality of conditions included in a second plurality of rules of the first plurality of rules among the pieces of training data agree, selecting one or a plurality of rules from the second plurality of rules based on a result of comparison between a value that indicates a probability of satisfaction of the first rule based on the pieces of training data and a plurality of values that indicate respective probabilities of satisfaction of the second plurality of rules; and
outputting, for an inference result of the machine learning model, explanatory information that includes the first rule and another rule other than the one or a plurality of rules among the second plurality of rules.

# FIG. 1

TRAINING DATA

GENERATION UNIT

EXTRACTION UNIT

SELECTION UNIT

OUTPUT UNIT

EXPLANATORY
INFORMATION

# FIG. 2

# FIG. 3

| ID | A | B | ... | LABEL |
|----|---|---|-----|-------|
| 1 | 5 | 2 | | positive |
| 2 | 6 | 2 | | negative |
| ... | | | | |

# FIG. 4

| ID | A < 5 | A < 6 | · · · | B < 2 | · · · | LABEL |
|----|-------|-------|-------|-------|-------|-------|
| 1 | 0 | 1 | | 0 | | positive |
| 2 | 0 | 0 | | 0 | | negative |
| · · · | | | | | | |

# FIG. 5

A<5 ∧ B<3 → negative

CONDITION | CONCLUSION

RULE

# FIG. 6

A<5 ∧ B<3 → negative (conf=0.1)

A<3 ∧ B<5 → negative (conf=0.1)

¬A<4 ∧ A<5 ∧ B<5 → negative (conf=0.1)

¬B<4 ∧ B<5 → negative (conf=0.1)

¬A<3 ∧ A<4 ∧ ¬B<3 ∧ B<4 → positive (conf=0.8)

A<5 ∧ B<5 → negative (conf=0.2)

¬A<5 → positive (conf=0.8)

¬A<7 → positive (conf=0.9)

¬B<5 → positive (conf=0.8)

¬B<7 → positive (conf=0.9)

# FIG. 7

conf = 0.8

conf = 0.7

conf = 0.1

7.5

B    5

5

A

# FIG. 8

# FIG. 9

RULE K

SET OF PIECES OF
DATA SATISFYING
RULE K

$= U$

RULE $R_1$

RULE $R_2$

EXCEPTION

RULE $R_3$

RULE $R_4$

RULE $R_5$

FAMILY OF SUBSETS TO BE COVER

RULE K : $A < 5 \land B < 5 \rightarrow$ negative (conf=0.2)
RULE $R_1$ : $A < 5 \land B < 3 \rightarrow$ negative (conf=0.1)
RULE $R_2$ : $\lnot B < 4 \land B < 5 \rightarrow$ negative (conf=0.1)
RULE $R_3$ : $\lnot A < 3 \land A < 4 \land \lnot B < 3 \land B < 4 \rightarrow$ positive (conf=0.8)
RULE $R_4$ : $A < 3 \land B < 5 \rightarrow$ negative (conf=0.1)
RULE $R_5$ : $\lnot A < 4 \land A < 5 \land B < 5 \rightarrow$ negative (conf=0.1)

# FIG. 10

40

49

41             44            45            46

| CPU | INPUT/ OUTPUT DEVICE | R/W UNIT | COMMUNICATION I/F |
|---|---|---|---|

47

50

| STORAGE UNIT | MEMORY |
|---|---|

MACHINE LEARNING
EXPLANATION PROGRAM

| GENERATION PROCESS | 52 |
|---|---|
| EXTRACTION PROCESS | 54 |
| SELECTION PROCESS | 56 |
| OUTPUT PROCESS | 58 |

43                          42

# FIG. 11

START

↓

ACQUIRE TRAINING DATA AND GENERATE RULES SATISFYING CONSTRAINT — S10

↓

EXTRACT COVERING RELATIONSHIP OF RULES (RULE K AND SET OF RULES {$R_i$}) — S12

↓

CALCULATE NUMBER OF PATTERNS OF conf — S14

↓

S16
NUMBER OF RULES $R_i$ > NUMBER OF PATTERNS + λ?

— NO →

OUTPUT RULE K AND SET OF RULES {$R_i$} AS EXPLANATORY INFORMATION — S22

YES ↓

SELECT RULES $R_i$ FOR WHICH DIFFERENCE FROM RULE K IN conf IS LESS THAN THRESHOLD — S18

↓

OUTPUT RULE K AND REMAINING RULE $R_i$ EXCLUDING SELECTED RULES $R_i$, AS EXPLANATORY INFORMATION

S20

↓

END

## INTERNATIONAL SEARCH REPORT

International application No.

**PCT/JP2021/035299**

### A. CLASSIFICATION OF SUBJECT MATTER

***G06N 20/00***(2019.01)i
FI:  G06N20/00

According to International Patent Classification (IPC) or to both national classification and IPC

### B. FIELDS SEARCHED

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | 福田貴三郎 ほか, 説明可能AIにおける上位概念を考慮したナレッジグラフからの説明変数選択, 人工知能学会研究会資料, 15 March 2021, Internet <URL:http://id.nii.ac.jp/1004/00011003/>, [retrieved on 16 November 2021], (FUKUDA, Takasaburo et al. A Variable Selection Method for Explainable AI using Hyponymy Relations of Knowledge Graph. JSAI Technical Report.) entire text | 1-19 |
| A | JP 2020-87338 A (FUJITSU LTD.) 04 June 2020 (2020-06-04) entire text | 1-19 |

☐ Further documents are listed in the continuation of Box C.　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

| International application No. |
|---|
| **PCT/JP2021/035299** |

| Patent document cited in search report | Publication date (day/month/year) | Patent family member(s) | Publication date (day/month/year) |
|---|---|---|---|
| JP 2020-87338 A | 04 June 2020 | (Family: none) | |

Form PCT/ISA/210 (patent family annex) (January 2015)